# EUROPEAN PATENT SPECIFICATION

(11) **EP 3 889 720 B1**
(45) Date of publication and mention of the grant of the patent: **05.04.2023**
(21) Application number: 18941100.2
(22) Date of filing: 29.11.2018
(51) Int. Cl.: G05D 1/02

(54) **WORK MACHINE, WORK MACHINE CONTROL METHOD, AND PROGRAM**
ARBEITSMASCHINE, ARBEITSMASCHINENSTEUERUNGSVERFAHREN UND PROGRAMM
MACHINE DE TRAVAIL, MÉTHODE DE CONTRÔLE DE MACHINE DE TRAVAIL, ET PROGRAMME

(43) Date of publication of application: 06.10.2021
(73) Proprietor: HONDA MOTOR CO., LTD., Minato-ku Tokyo 107-8556 (JP)
(72) Inventor: YAMAMURA, Makoto, Wako-shi, Saitama 351-0193 (JP); TAKAHASHI, Hiroto, Wako-shi, Saitama 351-0193 (JP); UDAGAWA, Takamasa, Wako-shi, Saitama 351-0193 (JP)
(74) Representative: Beder, Jens
(86) International application number: PCT/JP2018/043890
(87) International publication number: WO 2020/110248

(56) References cited:
- WO-A1-2014/049856
- WO-A1-2014/064990
- DE-T5-112015 000 108
- JP-A- H01 195 515
- JP-A- H09 326 032
- JP-A- H11 282 533
- JP-A- 2002 351 546
- JP-A- 2009 031 992
- JP-A- 2014 238 409
- JP-A- 2015 026 247
- JP-A- 2016 091 336
- HABACHER MICHAEL ET AL: "Binocular approach to 3D pose measurement with auto-calibration", 2015 IEEE INTERNATIONAL INSTRUMENTATION AND MEASUREMENT TECHNOLOGY CONFERENCE (I2MTC) PROCEEDINGS, IEEE, 11 May 2015 (2015-05-11), pages 881-886, XP033171150, DOI: 10.1109/I2MTC.2015.7151385 [retrieved on 2015-07-06]

## Description

### TECHNICAL FIELD

The present invention relates to a work machine capable of autonomous traveling, a control method of the work machine, and a program.

### BACKGROUND ART

There is conventionally known an autonomous work machine (for example, a lawn mower) that measures the distance to an object in the external world and autonomously travels based on the measurement result. Japanese Patent Laid-Open No. 2017-173969 discloses an autonomous traveling system that performs autonomous traveling based on an image captured by a camera. Japanese Patent Laid-Open No. 9-128044 discloses a moving work machine that includes various sensors such as an obstacle recognition sensor configured to detect a surrounding obstacle using an ultrasonic wave or the like, and performs autonomous traveling in accordance with sensor information.

If autonomous traveling is performed based on an image captured by a camera, it can be considered that in a camera failure state, autonomous traveling is maintained using various distance measuring sensors such as an ultrasonic sensor and an infrared sensor as an alternative means.

However, if a distance measuring sensor is used in a camera failure state, power consumption increases, and the product cost also increases.

WO 2014/064990 A1 discloses a work machine comprising two cameras as a part of a stereo camera system, a distance obtaining means for obtaining distance information between the work machine and an object based on images with a parallax which are captured by the cameras and a control means for controlling the work machine based on the obtained distance information.

Michael Habacher et al.: "Binocular approach to 3D pose measurement with auto-calibration", 2015, IEEE International Instrumentation and Measurement Technology Conference (I2MTC) Proceedings, 20150511 IEEE discloses a method for determining the distance between an apparatus and an object based on images captured by one camera of a stereo camera system using a perspective reconstruction when a failure is detected in the other camera of the stereo camera system.

### SUMMARY

### TECHNICAL PROBLEM

It is an object of the present invention to provide a work machine capable of autonomous traveling without using a distance measuring sensor in a camera failure state.

### SOLUTION TO PROBLEM

In order to solve the above-described problem and achieve the object there is provided a work machine that operates based on an image of a camera, comprising:
a plurality of cameras;
detection means for detecting a failure or a trouble in one of the plurality of cameras;
distance obtaining means for, if the failure or the trouble is not detected, obtaining distance information between the work machine and an object based on images with a parallax which are captured by the plurality of cameras, and if the failure is detected, obtaining the distance information based on an image captured by another camera in which the failure or the trouble is not detected; and
control means for controlling the work machine based on the distance information obtained by the distance obtaining means.

The work machine further comprises an object recognition means configured to recognize the object based on a first analysis model and an image captured by one of the plurality of cameras, wherein the control means is configured to control, if the failure or the trouble is not detected, an operation of the work machine based on the distance information obtained based on the images with the parallax by the distance obtaining means and an object recognition result obtained by the object recognition means

### ADVANTAGEOUS EFFECTS OF INVENTION

It is possible to provide a work machine capable of autonomous traveling without using a distance measuring sensor in a camera failure state. Even if a failure occurs in one of cameras, the work machine is controlled only by the remaining cameras. Since other sensors for assisting are unnecessary, the product cost can be reduced, and an increase in power consumption can be prevented.

Other features and advantages will be apparent from the following description taken in conjunction with the accompanying drawings. The following examples/aspects/ embodiments are not according to the invention and are present for illustration purposes only. The invention as such is set forth in the independent claims 1 and 10.

Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.
Fig. 1 is a view showing the outer appearance of a work machine capable of autonomous traveling according to an embodiment of the present invention;
Fig. 2 is a view observing the work machine according to the embodiment of the present invention sideways;
Fig. 3 is a block diagram showing the input/output relationship of an electronic control unit (ECU) that controls the work machine according to the embodiment of the present invention;
Fig. 4 is a flowchart showing a processing procedure executed by the work machine according to the embodiment of the present invention;
Fig. 5 is a flowchart showing a detailed procedure of autonomous traveling control processing in a camera normal state according to the embodiment of the present invention; and
Fig. 6 is a flowchart showing a detailed procedure of autonomous traveling control processing in a camera failure state according to the embodiment of the present invention.

### DESCRIPTION OF EMBODIMENTS

Hereinafter, the embodiments of the present invention will be described with reference to the accompanying drawings. It should be noted that the same reference numerals denote the same constituent elements throughout the drawings.

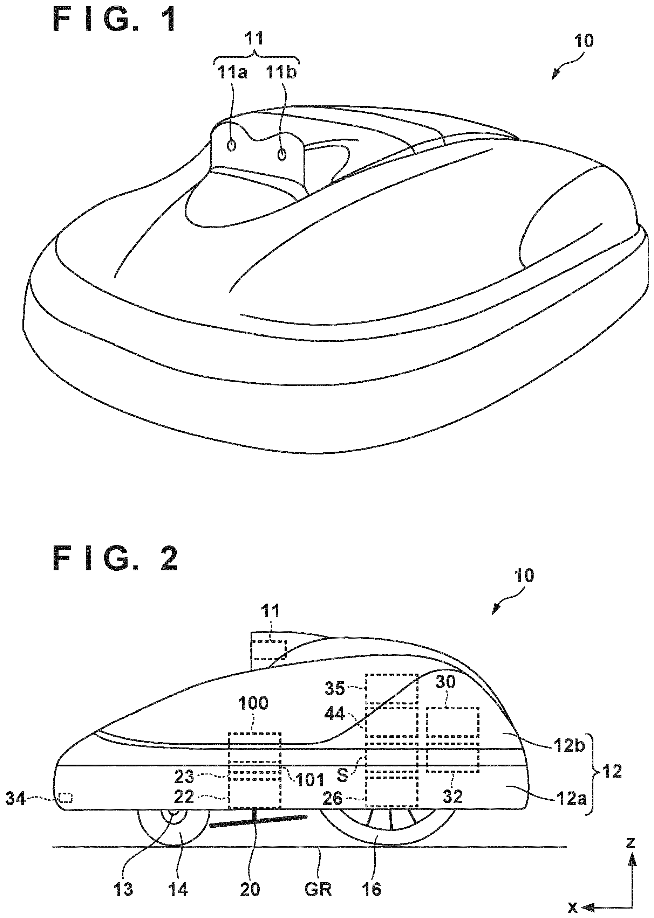

Fig. 1 is a view showing the outer appearance of an autonomous work machine capable of autonomous traveling according to an embodiment of the present invention. In the following description, the traveling direction (vehicle longitudinal direction) of the work machine in a side view, a lateral direction (vehicle width direction) perpendicular to the traveling direction, and a perpendicular direction perpendicular to the traveling direction and the lateral direction are respectively defined as a front-and-rear direction, a left-and-right direction, and a vertical direction, and the arrangement of each component will be explained in accordance with these directions.

In Fig. 1, reference numeral 10 denotes a work machine (to be referred to as "a work vehicle" hereinafter). More specifically, the work vehicle 10 functions as an autonomous traveling lawn mower. However, the lawn mower is merely an example, and the present invention is also applicable to other types of work machines. The work vehicle 10 has a camera unit 11 including a plurality of cameras (a first camera 11a and a second camera 11b), and can calculate and obtain information of the distance between the work vehicle 10 and an object existing in front of the work vehicle 10 by using images captured by the first and second cameras 11a and 11b having a parallax. Note that in the example shown in Fig. 1, the camera unit 11 includes two cameras. However, the camera unit 11 may include three or more cameras.

Fig. 2 is a view observing the work vehicle 10 in the lateral direction (vehicle width direction). As shown in Fig. 2, the work vehicle 10 includes the camera unit 11, a vehicle body 12, a stay 13, front wheels 14, rear wheels 16, a blade 20, a work motor 22, a motor holding member 23, a blade height adjusting motor 100, and a translation mechanism 101. The work vehicle 10 also includes traveling motors 26, various sensors S, an ECU (Electronic Control Unit) 44, a charging unit 30, a battery 32, a charging terminal 34, and a notification unit 35.

The vehicle body 12 of the work vehicle 10 includes a chassis 12a and a frame 12b attached to the chassis 12a. The front wheels 14 are two, left and right small-diameter wheels fixed to the front part of the chassis 12a via the stay 13. The rear wheels 16 are two, left and right large-diameter wheels attached to the rear part of the chassis 12a.

The blade 20 is a lawn mowing rotary blade attached near the central position of the chassis 12a. The work motor 22 is an electric motor arranged above the blade 20. The blade 20 is connected to and rotated by the work motor 22. The motor holding member 23 holds the work motor 22. The rotation of the motor holding member 23 is regulated with respect to the chassis 12a. In addition, the vertical movement of the motor holding member 23 is permitted by a combination of a guide rail and a slider capable of vertically moving by being guided by the guide rail.

The blade height adjusting motor 100 is a motor for adjusting the height of the blade 20 in the vertical direction from a ground surface GR. The translation mechanism 101 is connected to the blade height adjusting motor 100, and converts the rotation of the blade height adjusting motor 100 into a vertical translational movement. The translation mechanism 101 is also connected to the motor holding member 23 for holding the work motor 22.

The rotation of the blade height adjusting motor 100 is converted into the translational movement (vertical movement) by the translation mechanism 101, and this translational movement is transmitted to the motor holding member 23. The translational movement (vertical movement) of the motor holding member 23 causes the work motor 22 held by the motor holding member 23 to translationally move (vertically move). The height of the blade 20 from the ground surface GR can be adjusted by the vertical movement of the work motor 22.

The traveling motors 26 are two electric motors (motors) attached to the chassis 12a of the work vehicle 10. The two electric motors are connected to the left and right rear wheels 16. The left and right wheels are independently rotated forward (rotated in an advancing direction) or rotated backward (rotated in a retreating direction) by using the front wheels 14 as driven wheels and the rear wheels 16 as driving wheels. This allows the work vehicle 10 to move in various directions.

The charging terminal 34 is a charging terminal installed in the front end position of the frame 12b in the front-and-rear direction. The charging terminal 34 can receive power from a charging station (not shown) when connected to a corresponding terminal of the charging station. The charging terminal 34 is connected to the charging unit 30 by a line, and the charging unit 30 is connected to the battery 32. The work motor 22, the traveling motors 26, and the blade height adjusting motor 100 are also connected to the battery 32, and receive power from the battery 32.

The ECU 44 is an electronic control unit including a microcomputer formed on a circuit board, and controls the operation of the work vehicle 10. Details of the ECU 44 will be described later. If an abnormality occurs in the work vehicle 10, the notification unit 35 notifies the user of the occurrence of the abnormality. For example, a notification is made by a voice or display. Alternatively, the notification unit 35 outputs the abnormality occurrence to an external device connected to the work vehicle 10 by a wire or wirelessly. The user can know the occurrence of the abnormality via the external device.

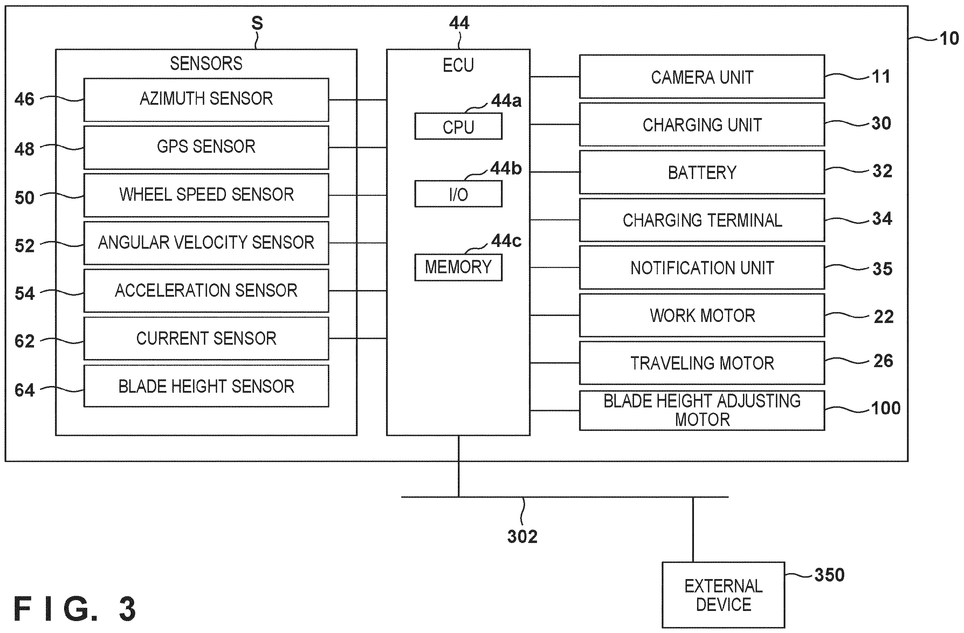

Fig. 3 is a block diagram showing the input/output relationship of the electronic control unit (ECU) that controls the work vehicle 10. As shown in Fig. 3, the ECU 44 includes a CPU 44a, an I/O 44b, and a memory 44c. The memory 44c is, for example, a ROM (Read Only Memory), an EEPROM (Electrically Erasable Programmable Read Only Memory), or a RAM (Random Access Memory). The memory 44c stores the work schedule of the work vehicle 10, information on the work area, and various programs for controlling the operation of the work vehicle 10. The ECU 44 can operate as each processing unit for implementing the present invention by reading out and executing a program stored in the memory 44c.

The ECU 44 is connected to the various sensors S. The sensors S include an azimuth sensor 46, a GPS sensor 48, a wheel speed sensor 50, an angular velocity sensor 52, an acceleration sensor 54, a current sensor 62, and a blade height sensor 64.

The azimuth sensor 46 and the GPS sensor 48 are sensors for obtaining information of the direction and the position of the work vehicle 10. The azimuth sensor 46 detects the azimuth corresponding to the terrestrial magnetism. The GPS sensor 48 receives radio waves from GPS satellites and detects information indicating the current position (the latitude and the longitude) of the work vehicle 10.

The wheel speed sensor 50, the angular velocity sensor 52, and the acceleration sensor 54 are sensors for obtaining information on the moving state of the work vehicle 10. The wheel speed sensor 50 detects the wheel speeds of the left and right wheels 16. The angular velocity sensor 52 detects the angular velocity around the vertical axis (the z-axis in the perpendicular direction) in the barycentric position of the work vehicle 10. The acceleration sensor 54 detects accelerations in the directions of three perpendicular axes, that is, the x-, y-, and z-axes, which act on the work vehicle 10.

The current sensor 62 detects the current consumption (power consumption) of the battery 32. The detection result of the current consumption (power consumption) is saved in the memory 44c of the ECU 44. When a predetermined power amount is consumed and the power amount stored in the battery 32 becomes equal to or lower than a threshold value, the ECU 44 performs control for returning the work vehicle 10 to the charging station (not shown) in order to charge the work vehicle 10.

The blade height sensor 64 detects the height of the blade 20 from the ground surface GR. The blade height sensor 64 outputs the detection result to the ECU 44. Under the control of the ECU 44, the blade height adjusting motor 100 is driven, and the blade 20 vertically moves, thereby adjusting the height from the ground surface GR.

The outputs from the various sensors S are input to the ECU 44 via the I/O 44b. Based on the outputs from the various sensors S, the ECU 44 supplies power from the battery 32 to the traveling motor 26, the work motor 22, and the height adjusting motor 100. The ECU 44 controls the traveling motor 26 by outputting a control value via the I/O 44b, thereby controlling traveling of the work vehicle 10. The ECU 44 also controls the height adjusting motor 100 by outputting a control value via the I/O 44b, thereby controlling the height of the blade 20. Furthermore, the ECU 44 controls the work motor 22 by outputting a control value via the I/O 44b, thereby controlling the rotation of the blade 20. The I/O 44b can function as a communication interface, and can be connected to an external device (for example, a communication device such as a smartphone or a personal computer) 350 via a network 302 by a wire or wirelessly.

### <Processing>

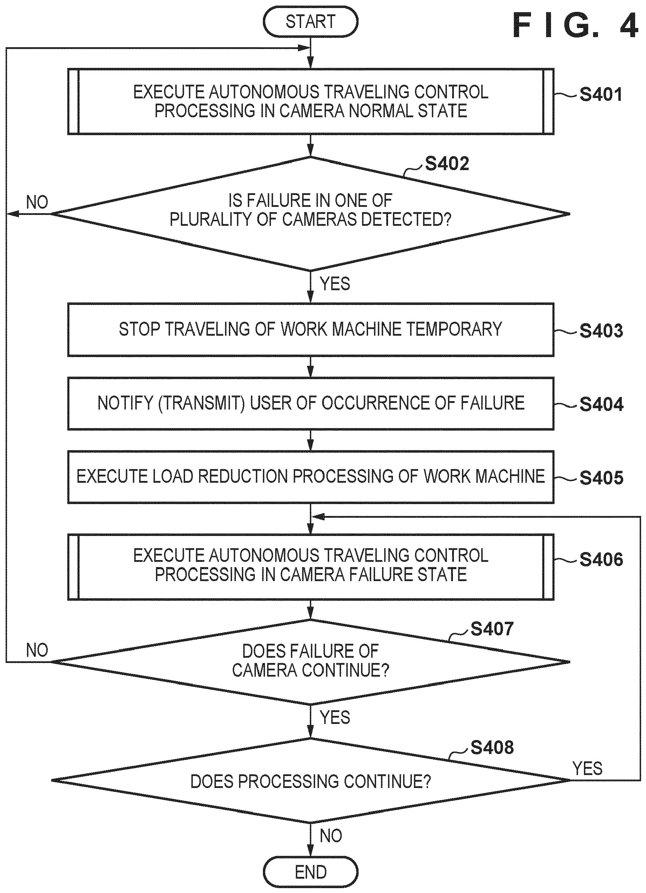

The procedure of processing executed by the work vehicle 10 according to this embodiment will be described next with reference to the flowchart of Fig. 4. In this embodiment, different processes are executed in a case in which both the first camera 11a and the second camera 11b are normal without any failure and a case in which a failure has occurred in one of them.

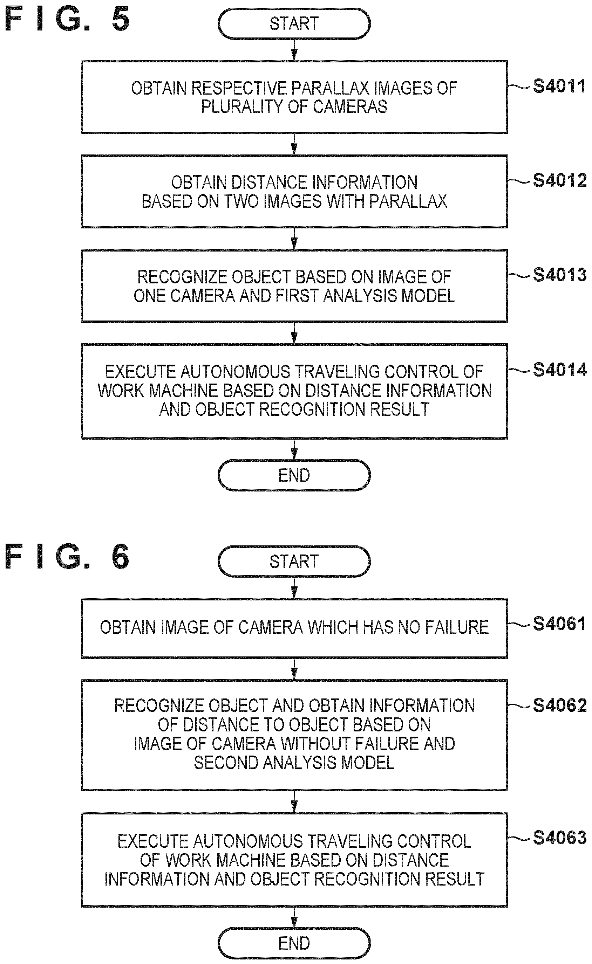

In step S401, the ECU 44 executes autonomous traveling control processing in a camera normal state. Details of this step will be described later with reference to Fig. 5. In step 402, the ECU 44 determines whether a failure in one of the plurality of cameras (the first camera 1 1a and the second camera 11b) is detected. For example, based on input signals from the camera unit 11, if the input signal is not detected from one of the cameras, occurrence of a failure may be detected. Alternatively, occurrence of a trouble may be detected in a case in which an input signal is detected, but blackout occurs in a part of the field of a camera, or the field is blurred because of a water droplet adhered to the camera. Occurrence of a trouble may be detected based on the brightness value of a camera image. For example, if a camera is covered with a leaf or mud, a camera image becomes dark. In this case, it is substantially impossible to obtain a camera image, and occurrence of a trouble can be detected. As described above, not only determining occurrence of a mechanical failure in a camera but also determining whether some trouble has occurred in a camera may be performed. If a failure of one of the cameras is detected, the process advances to step S403. On the other hand, if a failure is detected in neither of the cameras, that is, if both the first camera 11a and the second camera 11b are normal, the process returns to step S401 to continue the autonomous traveling control processing in the camera normal state.

In step S403, the ECU 44 temporarily stops traveling of the work vehicle 10. If traveling is continued in a state in which a failure is detected, collision against an object or deviation from the work field may occur, and therefore, traveling is stopped.

In step S404, the ECU 44 controls the notification unit 35 to notify the user of the occurrence of the failure. The notification unit 35 may directly notify the user of the occurrence of the failure by a voice or display via a speaker or a display mounted on the work vehicle 10. Alternatively, the notification unit 35 may wirelessly communicate with the external device 305 via the network 302 and notify the user of the occurrence of the failure via the external device 305.

In step S405, the ECU 44 executes load reduction processing of reducing the battery (battery 32) load of the work vehicle 10. When a failure is detected, the work vehicle 10 should be safely returned to a station such as a charging station. To save the battery, processing of reducing the battery load is executed. For example, the load reduction processing may include processing of lowering the traveling speed when the work vehicle 10 performs autonomous traveling. The ECU 44 may control the traveling motors 26 to lower the traveling speed to, for example, a predetermined speed. The load reduction processing may also include processing of lowering the rotation speed of the blade 20 provided in the work vehicle 10 by controlling the work motor 20. Processing of not lowering the speed but stopping the rotation of the blade 20 may be performed. The load reduction processing may also include processing of reducing the work area where the work vehicle 10 performs a work. As the load reduction processing, one or an arbitrary combination of these processes may be executed.

In step S406, the ECU 44 executes autonomous traveling control processing in camera failure state. Details of this step will be described later with reference to Fig. 6.

In step S407, the ECU 44 determines whether the failure of the camera continues. In this step, the ECU 44 determines, by the same method as the failure detection method of step S402, whether the camera has a failure. As a result, if the failure of the camera continues, the process advances to step S408. On the other hand, if the failure of the camera does not continue, that is, all the plurality of cameras have returned to the normal state, the process returns to step S401 to execute autonomous traveling control processing in the camera normal state. As a case in which the state returns to the normal state, a case can be assumed in which, for example, a leaf that covers one camera drops due to a vibration or wind in traveling, and an appropriate camera image can be obtained again.

In step S408, the ECU 44 determines whether to continue the processing. For example, if the work vehicle 10 returns to the charging station (not shown), or the user notified of the occurrence of the failure powers off the work vehicle 10, the processing is ended. Otherwise, it is determined to continue the processing. Upon determining, in this step, to continue the processing, the process returns to step S406 to perform the autonomous traveling control processing in the camera failure state because the failure of the camera continues. On the other hand, upon determining to end the processing, the series of processes shown in Fig. 4 is ended.

Note that in the processing shown in Fig. 4, the description has been made using, as an example, a case in which both the first camera 11a and the second camera 11b are normal without any failure and a case in which a failure has occurred in one of them. However, a case in which failures of both cameras can occur. If a failure is detected in each camera, the ECU 44 may determine that autonomous traveling is impossible and stop the work vehicle 10. The processes of steps S403 to S405 are not essential processes, and at least some of these may be omitted.

Fig. 5 is a flowchart showing a detailed procedure of autonomous traveling control processing in the camera normal state in step S401 of Fig. 4.

In step S4011, the ECU 44 obtains, from the camera unit 11, an image captured by the first camera 11a and an image captured by the second camera 11b. These images are images with a parallax.

In step S4012, the ECU 44 obtains the distance information between the work vehicle 10 and an object based on the parallax information of each of the images captured by the first camera 11a and the second camera 11b. In this processing, distance information can be obtained from a plurality of images with a parallax. The distance information calculation method in this step is a known technique, and a detailed description thereof will be omitted.

In step S4013, the ECU 44 recognizes an object based on one image captured by the first camera 11a or the second camera 11b and an analysis model for the camera normal state. The analysis model for the camera normal state is a model used in a normal state without a failure in a camera, and is an object recognition model used to recognize an object from an image. The analysis model for the camera normal state is a model incapable of obtaining distance information. As compared to another analysis model (to be described later) used in the camera failure state, the held amount of information is small, and the calculation load is small. Hence, object recognition processing can be performed in a short time.

In step S4014, the ECU 44 controls the operation of the work vehicle 10 based on the distance information obtained in step S4012 and an object recognition result obtained in step S4013. Here, since no failure is detected, the work vehicle is caused to continue a work in accordance with a work plan input in advance. That is, in this embodiment, the work vehicle is caused to continue a lawn mowing work. The series of processes shown in Fig. 5 thus ends.

Fig. 6 is a flowchart showing a detailed procedure of autonomous traveling control processing in the camera failure state in step S406 of Fig. 4.

In step S4061, the ECU 44 obtains an image captured by one of the first camera 11a and the second camera 11b, which has no failure.

In step S4062, based on the image captured by the one camera without a failure and an analysis model for the camera failure state, the ECU 44 recognizes an object and obtains the distance information between the work vehicle 10 and the object. The analysis model for the camera failure state is an object recognition model capable of obtaining distance information, and is a model that stores the distance from the object to the work vehicle 10 and the size of the object observed at the distance in association with each other. For example, an object (for example, a marker) installed on the field where the work vehicle 10 performs a work is observed in a large size if the distance from the work vehicle 10 is short, and observed in a small size if the distance is long. If there is an image including the marker, the image is collated with the analysis model for the camera failure state, thereby obtaining the distance information up to the marker according to the size of the marker in the image. As compared to the analysis model for the camera normal state, the analysis model for the camera failure state holds a large amount of information. Although the calculation load increases, it is possible to obtain distance information while recognizing an object as well.

In step S4063, the ECU 44 controls the operation of the work vehicle 10 based on the object recognition result and the distance information obtained in step S4062. For example, the ECU 44 may perform control of returning the work vehicle 10 to the charging station. At this time, as described concerning step S405 of Fig. 4, control of returning the work vehicle is performed in accordance with the contents of load reduction processing of the work vehicle 10. For example, control of returning the work vehicle may be performed in a state in which the traveling speed of the work vehicle 10 is reduced. Alternatively, control of returning the work vehicle may be performed in a state in which the work speed of the work vehicle 10 (for example, the rotation speed of the blade 20) is lowered or in a state in which the work (rotation) is stopped. Instead of performing control of returning the work vehicle to the charging station, the work may be continued. At this time, the work may be continued in a state in which the traveling speed of the work vehicle 10 is reduced, or traveling may be continued in a state in which the work speed (for example, the rotation speed of the blade 20) is lowered or in a state in which the work (rotation) is stopped. Alternatively, the work may be continued while reducing the work area where the work vehicle 10 performs the work. In this case, to facilitate return to the charging station, the work area may be reduced such that a work area far from the charging station is reduced, and a close work area is left. The series of processes shown in Fig. 6 thus ends.

As described above, in this embodiment, an object recognition model incapable of measuring a distance is prepared as the analysis model used in the camera normal state, and an object recognition model capable of measuring a distance is prepared as the analysis model used in the camera failure state. The analysis model used in processing is switched between the camera normal state and the camera failure state. This makes it possible to provide a work machine capable of autonomous traveling without an alternative means such as a distance measuring sensor (an ultrasonic sensor or an infrared sensor) even in the camera failure state. It is therefore possible to reduce the product cost and prevent an increase in power consumption caused by driving of a distance measuring sensor.

Furthermore, if the camera returns from the failure state to the normal state, the analysis model used so far in the camera failure state is switched to the analysis model for the camera normal state, thereby implementing adaptive control of the work machine in accordance with the situation.

Note that in the embodiment, an example in which the work vehicle 10 includes two cameras has been described. However, this embodiment can also be applied even in a case in which the work vehicle 10 includes three or more cameras. For example, if a failure or a trouble occurs in two of three cameras, distance detection by parallax cannot be performed. In such a case, the analysis model may be switched. The analysis model is switched based on whether the number of cameras having neither failure nor trouble in the plurality of cameras is one, thereby implementing adaptive control of the work machine in accordance with the the situation.

The present invention is defined in the attached claims.

### <Summary of Embodiment>

A work machine (for example, 10) according to the above-described embodiment is
a work machine (for example, 10) that operates based on an image of a camera, comprising:
a plurality of cameras (for example, 11a, 11b);
detection means (for example, 44) for detecting a failure or a trouble in one of the plurality of cameras; and
control means (for example, 44) for, if the failure or the trouble is detected by the detection means, controlling the work machine based on an image captured by another camera in which the failure or the trouble is not detected.

According to this embodiment, it is possible to provide a work machine capable of autonomous traveling without using a distance measuring sensor when a failure or a trouble has occurred in the camera. In addition, even if a failure or a trouble occurs in one of the cameras, the work machine is controlled only by the remaining cameras. Since other sensors for assisting are unnecessary, the product cost can be reduced, and an increase in power consumption can be prevented.

The work machine (for example, 10) according to the above-described embodiment further comprises:
distance obtaining means (for example, 44) for obtaining distance information between the work machine and an object based on images with a parallax which are captured by the plurality of cameras; and
object recognition means (for example, 44) for recognizing the object based on a first analysis model and an image captured by one of the plurality of cameras,
wherein if the failure or the trouble is not detected, the control means (for example, 44) controls an operation of the work machine based on the distance information obtained by the distance obtaining means and an object recognition result by the object recognition means.

According to this embodiment, if neither failure nor trouble occurs in the camera, the distance can be detected from images with a parallax. It is therefore possible to reduce the load of processing.

In the work machine (for example, 10) according to the above-described embodiment,
the first analysis model is a model incapable of obtaining the distance information.

According to this embodiment, if neither failure nor trouble occurs in the camera, object recognition is performed using a model incapable of obtaining distance information. It is therefore possible to reduce the load of processing.

The work machine (for example, 10) according to the above-described embodiment further comprises
second object recognition means (for example, 44) for recognizing the object and obtaining the distance information between the work machine and the object based on a second analysis model and an image captured by a camera in which the failure or the trouble is not detected,
wherein if the failure or the trouble is detected, the control means (for example, 44) controls the operation of the work machine based on the distance information obtained by the second object recognition means and an object recognition result by the second object recognition means.

According to this embodiment, when a failure or a trouble has occurred in the camera, distance information based on images with a parallax cannot be obtained. However, obtaining of the distance information can be continued based on the object recognition model.

In the work machine (for example, 10) according to the above-described embodiment,
the second analysis model is a model capable of obtaining the distance information.

According to this embodiment, obtaining of the distance information can be continued even in a camera failure state by using the model capable of obtaining distance information.

In the work machine (for example, 10) according to the above-described embodiment,
if the failure or the trouble is detected by the detection means, the control means (44) executes load reduction processing of reducing a battery load of the work machine.

According to this embodiment, when a failure or a trouble has occurred in the camera, the battery load is reduced, thereby continuously operating the work machine. For example, it is possible to improve the possibility that the work machine can achieve a desired operation such as return to a station.

In the work machine (for example, 10) according to the above-described embodiment,
the load reduction processing includes processing of lowering a traveling speed of the work machine.

According to this embodiment, the traveling speed of the work machine is lowered to reduce the battery load, thereby continuously operating the work machine.

In the work machine (for example, 10) according to the above-described embodiment,
the load reduction processing includes processing of lowering a work speed (for example, the rotation speed) of a work unit (for example, a blade) provided in the work machine.

According to this embodiment, the work speed of the work unit provided in the work machine is lowered to reduce the battery load, thereby continuously operating the work machine. For example, the rotation speed of the blade is lowered to reduce the battery load, thereby continuously operating the work machine.

In the work machine (for example, 10) according to the above-described embodiment,
the load reduction processing includes processing of reducing a work area where the work machine performs a work.

According to this embodiment, the work area where the work machine performs a work is reduced to reduce the battery load, thereby continuously operating the work machine.

The work machine (for example, 10) according to the above-described embodiment further comprises
notification means (for example, 305) for making a notification of occurrence of the failure or the trouble if the failure or the trouble is detected by the detection means.

According to this embodiment, when a failure or a trouble has occurred in the camera, the user is notified of the occurrence of the failure or the trouble and can therefore early grasp the situation.

In the work machine (for example, 10) according to the above-described embodiment,
if the failure or the trouble is detected by the detection means, the control means (for example, 44) performs control of returning the work machine to a station.

According to this embodiment, when a failure or a trouble has occurred in the camera, the work machine is early returned to the station, thereby preventing the operation from stopping due to battery exhaustion.

In the work machine (for example, 10) according to the above-described embodiment,
if the failure or the trouble is not detected any more by the detection means after the failure or the trouble is detected by the detection means,
the control means (for example, 44) performs switching from the second analysis model to the first analysis model and controls the work machine using the first analysis model.

According to this embodiment, if the camera returns to a normal state, the processing is changed to processing in the normal state, thereby executing control of the work machine while reducing the processing load. In addition, since the analysis model to be used is changed in accordance with the presence/absence of a failure or a trouble, it is possible to implement control using an appropriate analysis model according to the situation.

In the work machine (for example, 10) according to the above-described embodiment,
if the failure or the trouble is detected in all the plurality of cameras by the detection means, the control means (for example, 44) stops the operation of the work machine.

According to this embodiment, if a failure or a trouble has occurred in all cameras, the operation of the work machine is stopped, thereby preventing careless movement in a state in which obtaining of distance information or object recognition is impossible.

The work machine (for example, 10) according to the above-described embodiment, further comprises distance obtaining means (for example, 44) for obtaining distance information between the work machine and an object,
wherein the distance obtaining means
obtains the distance information based on images with a parallax which are captured by the plurality of cameras if the failure or the trouble is not detected, and
obtains the distance information based on an analysis model and an image captured by the other camera in which the failure or the trouble is not detected if the failure or the trouble is detected, and
the control means (for example, 44) controls the work machine based on the distance information obtained by the distance obtaining means.

According to this embodiment, if a failure or a trouble has occurred in the camera, the distance information can be continuously obtained.

A control method of the work machine (for example, 10) according to the above-described embodiment is
a control method of a work machine (for example, 10) that operates based on an image of a camera, comprising:
a detection step of detecting a failure or a trouble in one of a plurality of cameras (for example, 11a, 11b) provided in the work machine; and
a control step of, if the failure or the trouble is detected in the detection step, controlling the work machine based on an image captured by another camera in which the failure or the trouble is not detected.

According to this embodiment, even if a failure or a trouble occurs in one of the cameras, the work machine is controlled only by the remaining cameras. Since other sensors for assisting are unnecessary, the product cost can be reduced, and an increase in power consumption can be prevented.

A program according to the above-described embodiment is
a program configured to cause a computer to function as a work machine defined in any one of claims 1 to 9.

According to this embodiment, even if a failure or a trouble occurs in one of the cameras, control of controlling the work machine only by the remaining cameras can be implemented by the computer program.

## Claims

1. A work machine that operates based on an image of a camera, **characterized by** comprising:
a plurality of cameras (11a, 11b);
detection means (44) configured to detect a failure or a trouble in one of the plurality of cameras (11a, 11b);
distance obtaining means (44) configured to obtain, if the failure or the trouble is not detected, distance information between the work machine (10) and an object based on images with a parallax which are captured by the plurality of cameras (11a, 11b), and to obtain, if the failure is detected, the distance information based on an image captured by another camera in which the failure or the trouble is not detected;
control means (44) configured to control the work machine (10) based on the distance information obtained by the distance obtaining means (44); and
object recognition means (44) configured to recognize the object based on a first analysis model that is a model incapable of obtaining the distance information and an image captured by one of the plurality of cameras (11a, 11b);
second object recognition means (44) configured to recognize the object based on a second analysis model that is a model capable of obtaining the distance information and an information captured by the other camera in which the failure or the trouble is not detected; wherein
the control means (44) is configured to control, if the failure or the trouble is not detected, an operation of the work machine (10) based on the distance information obtained based on the images with the parallax by the distance obtaining means (44) and an object recognition result obtained by the object recognition means (44), wherein
The control means (44) is configured to control, if the failure or the trouble is detected, the operation of the work machine (10) based on the distance information obtained by the distance obtaining means (44) based on the image captured by the other camera and an object recognition result obtained by the second object recognition means (44).

2. The work machine according to claim 1, **characterized in that** the control means is configured to execute load reduction processing of reducing a battery load of the work machine (10) if the failure or the trouble is detected by the detection means (44).

3. The work machine according to claim 2, **characterized in that** the load reduction processing includes processing of lowering a traveling speed of the work machine (10).

4. The work machine according to claim 2 or 3, **characterized in that** the load reduction processing includes processing of lowering a work speed of a work unit (20, 22) provided in the work machine (10).

5. The work machine according to any one of claims 2 to 4, **characterized in that** the load reduction processing includes processing of reducing a work area where the work machine (10) performs a work.

6. The work machine according to any one of claims 1 to 5, **characterized by** further comprising notification means (305) for making a notification of occurrence of the failure or the trouble if the failure or the trouble is detected by the detection means (44).

7. The work machine according to any one of claims 1 to 6, **characterized in that** the control means (44) is configured to perform, if the failure or the trouble is detected by the detection means (10), control of returning the work machine (10) to a station.

8. The work machine according to any one of claims 1 to 7, **characterized in that** the control means (44) is configured to perform, if the failure or the trouble is not detected any more by the detection means (44) after the failure or the trouble is detected by the detection means (44), switching from the second analysis model to the first analysis model and to control the work machine (10) using the first analysis model.

9. The work machine according to any one of claims 1 to 8, **characterized in that** the control means (44) is configured to stop the operation of the work machine if the failure or the trouble is detected in all the plurality of cameras (11a, 11b) by the detection means (44).

10. A control method of a work machine that operates based on an image of a camera, **characterized by** comprising:
a detection step (S402) of detecting a failure or a trouble in one of a plurality of cameras (11a, 11b) provided in the work machine (10);
a distance obtaining step of obtaining (S4012), if the failure or the trouble is not detected, distance information between the work machine (10) and an object based on images with a parallax which are captured by the plurality of cameras (11a, 11b), and if the failure is detected, obtaining (S4062) the distance information based on an image captured by another camera in which the failure or the trouble is not detected;
an object recognition step (S4013, S4062) of recognizing the object based on a first analysis model that is a model incapable of obtaining the distance information and an image captured by one of the plurality of cameras (11a, 11b) or based on a second analysis model that is a model capable of obtaining the distance information and an image captured by the other camera in which the failure or the trouble is not detected; and
a control step (S4014, S4063) of controlling the work machine (10) based on the distance information obtained in the distance obtaining step, wherein
if the failure or the trouble is not detected, an operation of the work machine (10) is controlled in the control step (S4014, S4063) based on the distance information obtained based on the images with the parallax in the distance obtaining step and an object recognition result obtained in the object recognition step (S4013), or
if the failure or trouble is detected, the operation of the work machine (10) based on the distance information obtained by the distance obtaining means (44) based on the image captured by the other camera and an object recognition result obtained by the second object recognition means (44).

11. A program configured to cause a computer to function as a work machine defined in any one of claims 1 to 9.

## Patentansprüche

1. Arbeitsmaschine, die auf der Grundlage eines Bildes einer Kamera arbeitet, **dadurch gekennzeichnet, dass** sie aufweist:
eine Mehrzahl an Kameras (11a, nb);
eine Erkennungseinrichtung (44), ausgebildet, um einen Ausfall oder eine Störung bei einer der Mehrzahl an Kameras (11a, 11b) zu erkennen;
eine Entfernungserfassungseinrichtung (44), die so ausgebildet ist, dass sie, wenn der Ausfall oder die Störung nicht erkannt wird, Entfernungsinformationen zwischen der Arbeitsmaschine (10) und einem Objekt auf der Grundlage von durch die Mehrzahl an Kameras (11a, 11b) aufgenommenen Parallaxe aufweisenden Bildern erfasst, und dass sie, wenn der Ausfall erkannt wird, die Entfernungsinformationen auf der Grundlage eines von einer anderen, keinen Ausfall oder Störung aufweisenden Kamera aufgenommenen Bildes erhält;
eine Steuereinrichtung (44), die so konfiguriert ist, dass sie die Arbeitsmaschine (10) auf der Grundlage der von der Entfernungserfassungseinrichtung (44) erhaltenen Entfernungsinformationen steuert; und
eine Objekterkennungseinrichtung (44), die so ausgebildet ist, dass sie das Objekt auf der Grundlage eines ersten Analysemodells erkennt, wobei es sich um ein Modell handelt, das nicht in der Lage ist, die Entfernungsinformationen sowie ein von einer der Mehrzahl an Kameras (11a, 11b) aufgenommenes Bild zu erhalten;
eine zweite Objekterkennungseinrichtung (44), die so ausgebildet ist, dass sie das Objekt auf der Grundlage eines zweiten Analysemodells erkennt, wobei es sich um ein Modell handelt, das in der Lage ist, die Entfernungsinformationen sowie eine von der anderen, keinen Ausfall oder Störung aufweisenden Kamera aufgenommene Information zu erhalten; wobei
die Steuereinrichtung (44) so konfiguriert ist, dass sie, wenn der Ausfall oder die Störung nicht erkannt wird, den Betrieb der Arbeitsmaschine (10) auf der Grundlage der Entfernungsinformationen, die auf der Grundlage der Parallaxe aufweisenden Bilder mit der Entfernungserfassungseinrichtung (44) erhalten werden, und eines Objekterkennungsergebnisses, das durch die Objekterkennungseinrichtung (44) erhalten wird, steuert, wobei
die Steuereinrichtung (44) so konfiguriert ist, dass sie, wenn der Ausfall oder die Störung erkannt wird, den Betrieb der Arbeitsmaschine (10) auf der Grundlage der von der Entfernungserfassungseinrichtung (44) auf der Grundlage des von der anderen Kamera aufgenommenen Bildes erhaltenen Entfernungsinformationen, und eines von der zweiten Objekterkennungseinrichtung (44) erhaltenen Objekterkennungsergebnisses, steuert.

2. Arbeitsmaschine nach Anspruch 1, **dadurch gekennzeichnet, dass** die Steuereinrichtung so konfiguriert ist, dass sie, um die Batterielast der Arbeitsmaschine (10) zu reduzieren, einen Last-reduzierten Betrieb bewirkt, wenn der Ausfall oder die Störung durch die Erkennungseinrichtung (44) erkannt wird.

3. Arbeitsmaschine nach Anspruch 2, **dadurch gekennzeichnet, dass** der Last-reduzierte Betrieb die Verringerung der Fahrgeschwindigkeit der Arbeitsmaschine (10) umfasst.

4. Arbeitsmaschine nach Anspruch 2 oder 3, **dadurch gekennzeichnet, dass** der Last-reduzierte Betrieb die Verringerung der Arbeitsgeschwindigkeit einer in der Arbeitsmaschine (10) vorgesehenen Arbeitseinheit (20, 22) umfasst.

5. Arbeitsmaschine nach einem der Ansprüche 2 bis 4, **dadurch gekennzeichnet, dass** der Last-reduzierte Betrieb die Verkleinerung eines Arbeitsbereichs umfasst, in welchem die Arbeitsmaschine (10) eine Arbeit ausführt.

6. Arbeitsmaschine nach einem der Ansprüche 1 bis 5, **dadurch gekennzeichnet, dass** diese ferner eine Meldeeinrichtung (305) aufweist, um eine Meldung über das Auftreten des Ausfalls oder der Störung auszugeben, wenn der Ausfall oder die Störung von der Erkennungseinrichtung (44) erkannt wird.

7. Arbeitsmaschine nach einem der Ansprüche 1 bis 6, **dadurch gekennzeichnet, dass** die Steuereinrichtung (44) so konfiguriert ist, dass sie, wenn der Ausfall oder die Störung von der Erkennungseinrichtung (10) erkannt wird, die gesteuerte Rückführung der Arbeitsmaschine (10) zu einer Station vornimmt.

8. Arbeitsmaschine nach einem der Ansprüche 1 bis 7, **dadurch gekennzeichnet, dass** die Steuereinrichtung (44) so konfiguriert ist, dass sie, wenn der Ausfall oder die Störung nicht mehr von der Erkennungseinrichtung (44) erkannt wird, nachdem der Ausfall oder die Störung von der Erkennungseinrichtung (44) erkannt wurde, von dem zweiten Analysemodell auf das erste Analysemodell umschaltet und die Arbeitsmaschine (10) auf Grundlage des ersten Analysemodells steuert.

9. Arbeitsmaschine nach einem der Ansprüche 1 bis 8, **dadurch gekennzeichnet, dass** die Steuereinrichtung (44) so konfiguriert ist, dass sie den Betrieb der Arbeitsmaschine stoppt, wenn durch die Erkennungseinrichtung (44) der Ausfall oder die Störung bei sämtlichen Kameras (11a, 11b) erkannt wird.

10. Verfahren zur Steuerung einer auf der Grundlage eines Bildes einer Kamera arbeitenden Arbeitsmaschine, **dadurch gekennzeichnet, dass** es folgende Schritte aufweist:
einen Erkennungsschritt (S402) zum Erkennen eines Ausfalls oder einer Störung bei einer von einer Mehrzahl an in der Arbeitsmaschine (10) vorgesehenen Kameras (11a, 11b);
einen Entfernungserfassungsschritt zum Erfassen (S4012) von Entfernungsinformationen zwischen der Arbeitsmaschine (10) und einem Objekt auf der Grundlage von Parallaxe aufweisenden, von der Mehrzahl an Kameras (11a, 11b) aufgenommenen Bildern, wenn der Ausfall nicht erkannt wird, und, wenn der Ausfall erkannt wird, zum Erfassen (S4062) der Entfernungsinformationen auf der Grundlage eines von einer anderen, keinen Ausfall oder Störung aufweisenden Kamera aufgenommenen Bildes;
einen Objekterkennungsschritt (S4013, S4062) zum Erkennen des Objekts auf der Grundlage eines ersten Analysemodells, wobei es sich um ein Modell handelt, welches nicht in der Lage ist, die Entfernungsinformationen sowie ein von einer der Mehrzahl an Kameras (11a, 11b) aufgenommenes Bild zu erhalten, oder auf der Grundlage eines zweiten Analysemodells, wobei es sich um ein Modell handelt, welches in der Lage ist, die Entfernungsinformationen sowie ein von der anderen, keinen Ausfall oder Störung aufweisenden Kamera aufgenommenes Bild zu erhalten; und
einen Steuerungsschritt (S4014, S4063) zum Steuern der Arbeitsmaschine (10) auf der Grundlage der in dem Entfernungserfassungsschritt erhaltenen Entfernungsinformationen, wobei
wenn der Ausfall oder die Störung nicht erkannt wird, der Betrieb der Arbeitsmaschine (10) in dem Steuerungsschritt (S4014, S4063) auf der Grundlage der in dem Entfernungserfassungsschritt auf der Grundlage der Parallaxe aufweisenden Bilder erhaltenen Entfernungsinformationen, und eines in dem Objekterkennungsschritt (S4013) erhaltenen Objekterkennungsergebnisses, gesteuert wird, oder
wenn der Ausfall oder die Störung erkannt wird, der Betrieb der Arbeitsmaschine (10) auf der Grundlage der durch die Entfernungserfassungseinrichtung (44) auf der Grundlage der durch die andere Kamera aufgenommenen Bildes erhaltenen Entfernungsinformationen, und eines durch die zweite Objekterkennungseinrichtung (44) erhaltenes Objekterkennungsergebnisses, gesteuert wird.

11. Ein Programm, das ausgelegt ist, um einen Computer zu veranlassen, als Arbeitsmaschine nach einem der Ansprüche 1 bis 9 zu arbeiten.

## Revendications

1. Machine de travail qui fonctionne d'après une image d'une caméra, **caractérisée en ce qu'**elle comprend :
une pluralité de caméras (11a, 11b) ;
un moyen de détection (44) configuré pour détecter une panne ou un problème dans l'une de la pluralité de caméras (11a, 11b) ;
un moyen d'obtention de distance (44) configuré pour obtenir, si la panne ou le problème n'est pas détecté, des informations de distance entre la machine de travail (10) et un objet d'après des images avec une parallaxe qui sont capturées par la pluralité de caméras (11a, 11b), et pour obtenir, si la panne est détectée, les informations de distance d'après une image capturée par une autre caméra dans laquelle la panne ou le problème n'est pas détecté ;
un moyen de commande (44) configuré pour commander la machine de travail (10) d'après les informations de distance obtenues par le moyen d'obtention de distance (44) ; et
un moyen de reconnaissance d'objet (44) configuré pour reconnaître l'objet d'après un premier modèle d'analyse qui est un modèle incapable d'obtenir les informations de distance et une image capturée par l'une de la pluralité de caméras (11a, 11b) ;
un deuxième moyen de reconnaissance d'objet (44) configuré pour reconnaître l'objet d'après un deuxième modèle d'analyse qui est un modèle capable d'obtenir les informations de distance et une information capturée par l'autre caméra dans laquelle la panne ou le problème n'est pas détecté ; dans laquelle
le moyen de commande (44) est configuré pour commander, si la panne ou le problème n'est pas détecté, un fonctionnement de la machine de travail (10) d'après les informations de distance obtenues d'après les images avec la parallaxe par le moyen d'obtention de distance (44) et un résultat de reconnaissance d'objet obtenu par le moyen de reconnaissance d'objet (44), dans laquelle
le moyen de commande (44) est configuré pour commander, si la panne ou le problème est détecté, le fonctionnement de la machine de travail (10) d'après les informations de distance obtenues par le moyen d'obtention de distance (44) d'après l'image capturée par l'autre caméra et un résultat de reconnaissance d'objet obtenu par le deuxième moyen de reconnaissance d'objet (44).

2. Machine de travail selon la revendication 1, **caractérisée en ce que** le moyen de commande est configuré pour exécuter un traitement de réduction de charge consistant à réduire une charge de batterie de la machine de travail (10) si la panne ou le problème est détecté par le moyen de détection (44).

3. Machine de travail selon la revendication 2, **caractérisée en ce que** le traitement de réduction de charge comporte un traitement de baisse d'une vitesse de déplacement de la machine de travail (10).

4. Machine de travail selon la revendication 2 ou 3, **caractérisée en ce que** le traitement de réduction de charge comporte un traitement de baisse d'une vitesse de travail d'une unité de travail (20, 22) prévue dans la machine de travail (10).

5. Machine de travail selon l'une quelconque des revendications 2 à 4, **caractérisée en ce que** le traitement de réduction de charge comporte un traitement de réduction d'une aire de travail où la machine de travail (10) réalise un travail.

6. Machine de travail selon l'une quelconque des revendications 1 à 5, **caractérisée en ce qu'**elle comprend en outre un moyen de notification (305) destiné à faire une notification d'apparition de la panne ou du problème si la panne ou le problème est détecté par le moyen de détection (44).

7. Machine de travail selon l'une quelconque des revendications 1 à 6, **caractérisée en ce que** le moyen de commande (44) est configuré pour réaliser, si la panne ou le problème est détecté par le moyen de détection (10), une commande de renvoi de la machine de travail (10) à une station.

8. Machine de travail selon l'une quelconque des revendications 1 à 7, **caractérisée en ce que** le moyen de commande (44) est configuré pour réaliser, si la panne ou le problème n'est plus détecté par le moyen de détection (44) après que la panne ou le problème est détectée par le moyen de détection (44), passant du deuxième modèle d'analyse au premier modèle d'analyse et pour commander la machine de travail (10) en utilisant le premier modèle d'analyse.

9. Machine de travail selon l'une quelconque des revendications 1 à 8, **caractérisée en ce que** le moyen de commande (44) est configuré pour arrêter le fonctionnement de la machine de travail si la panne ou le problème est détecté dans chacune de la pluralité de caméras (11a, 11b) par le moyen de détection (44).

10. Procédé de commande d'une machine de travail qui fonctionne d'après une image d'une caméra, **caractérisé en ce qu'**il comprend :
une étape de détection (S402) consistant à détecter une panne ou un problème dans l'une d'une pluralité de caméras (11a, 11b) prévues dans la machine de travail (10) ;
une étape d'obtention de distance consistant à obtenir (S4012), si la panne ou le problème n'est pas détecté, des informations de distance entre la machine de travail (10) et un objet d'après des images avec une parallaxe qui sont capturées par la pluralité de caméras (11a, 11b), et si la panne est détectée, à obtenir (S4062) les informations de distance d'après une image capturée par une autre caméra dans laquelle la panne ou le problème n'est pas détecté ;
une étape de reconnaissance d'objet (S4013, S4062) consistant à reconnaître l'objet d'après un premier modèle d'analyse qui est un modèle incapable d'obtenir les informations de distance et une image capturée par l'une de la pluralité de caméras (11a, 11b) ou d'après un deuxième modèle d'analyse qui est un modèle capable d'obtenir les informations de distance et une image capturée par l'autre caméra dans laquelle la panne ou le problème n'est pas détecté ; et
une étape de commande (S4014, S4063) consistant à commander la machine de travail (10) d'après les informations de distance obtenues dans l'étape d'obtention de distance, dans lequel
si la panne ou le problème n'est pas détecté, un fonctionnement de la machine de travail (10) est commandé dans l'étape de commande (S4014, S4063) d'après les informations de distance obtenues d'après les images avec la parallaxe dans l'étape d'obtention de distance et un résultat de reconnaissance d'objet obtenu dans l'étape de reconnaissance d'objet (S4013), ou
si la panne ou le problème est détecté, le fonctionnement de la machine de travail (10) d'après les informations de distance obtenues par le moyen d'obtention de distance (44) d'après l'image capturée par l'autre caméra et un résultat de reconnaissance d'objet obtenu par le deuxième moyen de reconnaissance d'objet (44).

11. Programme configuré pour amener un ordinateur à fonctionner comme une machine de travail définie dans l'une quelconque des revendications 1 à 9.
